# FASCICULE DE BREVET EUROPEEN

(11) **EP 3 509 939 B1**
(45) Date de publication et mention de la délivrance du brevet: **07.06.2023**
(21) Numéro de dépôt: 17754187.7
(22) Date de dépôt: 07.07.2017
(51) Int. Cl.: B63H 8/16

(54) **DISPOSITIF DE CONTRÔLE POUR LES AILES DE TRACTION**
STEUERUNGSVORRICHTUNG FÜR LEISTUNGSDRACHEN
CONTROL DEVICE FOR POWER KITES

(30) Priorité: 08.09.2016 FR 1601325
(43) Date de publication de la demande: 17.07.2019
(73) Titulaire: Letort, Régis André Paul, 44680 Chaumes-en-Retz (FR)
(72) Inventeur: Letort, Régis André Paul, 44680 Chaumes-en-Retz (FR)
(74) Mandataire: Cabinet Chaillot
(86) Numéro de dépôt international: PCT/FR2017/000140
(87) Numéro de publication internationale: WO 2018/046806

(56) Documents cités:
- WO-A1-2011/076270
- FR-A1- 2 820 401
- FR-A1- 2 837 463
- FR-A1- 2 937 300
- FR-A1- 3 004 361

## Description

La présente invention a pour objet un dispositif de contrôle pour les ailes de traction. Ce nouveau dispositif est constitué d'une structure haute en forme de « Y » dont la base est reliée, par le biais d'une articulation, au centre d'une barre de contrôle horizontale disposée perpendiculairement par rapport à la structure haute. Les lignes de commande d'une aile de traction sont fixées aux pré-lignes avant et arrière prévues sur le dispositif.

Comparé à une barre de kite standard, le dispositif de contrôle selon l'invention permet à l'utilisateur de s'équilibrer plus facilement avec des lignes très courtes car l'appui sur la barre de contrôle est plus important.

Le dispositif de contrôle à quatre lignes le plus couramment utilisé pour diriger les ailes de traction est une barre de préhension horizontale d'environ 40cm à 60cm (n° brevet FR9705438).

Les deux lignes de commande du bord de fuite de l'aile sont fixées aux extrémités de la barre et les deux lignes de commande du bord d'attaque de l'aile sont reliées à un cordon unique traversant une partie ajourée située au centre de la barre. La base du cordon unique située sous la barre comporte une boucle de largage s'accrochant au harnais de l'utilisateur. Les lignes de commande du bord d'attaque étant fixes, l'utilisateur pousse ou tire la barre pour modifier la longueur des lignes de commande du bord de fuite afin de diminuer (choquer) ou augmenter (border) la puissance de l'aile. Pour diriger cette dernière, il incline un des côtés de la barre de pilotage.

Un autre dispositif de contrôle connu est constitué de deux petites barres verticales, coudées, indépendantes (brevet n°US489227A) que l'utilisateur tient en main. Sur chaque extrémité haute des petites barres est fixée une ligne de commande du bord d'attaque d'une aile et sur chaque extrémité basse est fixée une ligne de commande du bord de fuite de l'aile.

Il existe au Canada un dispositif de contrôle (brevet n°CA2152206) principalement utilisé sur la neige avec des ailes spécifiques et des lignes très courtes. Ce dispositif est constitué d'une barre de grande longueur. Les deux lignes du bord d'attaque de l'aile sont fixées à l'avant de la barre et les deux lignes du bord de fuite à l'arrière. L'utilisateur s'attache à un cordon fixe positionné à l'avant de la barre, derrière les lignes de commande du bord d'attaque de l'aile.

Un autre dispositif (brevet n°FR0805823) conçu pour pratiquer le kite avec des lignes très courtes est constitué d'une barre centrale et de deux extrémités élargies de forme triangulaire. L'extrémité avant de la barre comporte une poignée de préhension. Les lignes du bord de fuite d'une aile sont reliées aux extrémités de la partie élargie arrière et les lignes du bord d'attaque sont fixées juste derrière la poignée de préhension avant. L'utilisateur effectue des mouvements de poignets pour diriger l'aile et il pousse ou tire la partie arrière du dispositif pour border ou choquer.

Les dispositifs de contrôle décrits ci-dessus présentent plusieurs inconvénients.

Une barre de kite standard nécessite une certaine longueur de lignes pour bien équilibrer le pratiquant car c'est le déplacement de l'aile qui crée la tension dans les lignes du bord de fuite et apporte l'appui nécessaire à l'utilisateur, notamment dans les molles de vent ou les vents irréguliers.

La longueur moyenne des lignes est actuellement de 23m. Avec des lignes très courtes (ex : 8m à 12m), la distance parcourue par l'aile dans sa fenêtre de vol avant d'être relancée est insuffisante pour créer un appui franc et régulier sur la barre de contrôle. La pratique sera alors moins agréable et confortable. Les deux petites barres verticales appelées communément « poignées » présente le même inconvénient que la barre standard, l'appui est encore moins important du fait des deux parties indépendantes.

La barre de contrôle du Paraskiflex pratiqué au Canada et le dispositif comportant des parties élargies à l'avant et à l'arrière apportent l'appui nécessaire pour équilibrer le pratiquant avec des lignes très courtes car les lignes de commande du bord d'attaque et du bord de fuite de l'aile sont séparées par une barre rigide sur laquelle le pratiquant peut prendre appui, à la manière d'un wishbone de planche à voile.

Le problème majeur de ce type de barre concerne le pilotage de l'aile, moins agréable, performant et instinctif que celui d'une barre de kite standard. De plus, le système de Border/choquer est moins efficace et l'utilisateur doit changer le dispositif de sens à chaque virement de bord.

Le dispositif selon l'invention permet de remédier aux inconvénients précités. Il apporte l'appui nécessaire à l'utilisateur pour pratiquer le kite avec des lignes très courtes grâce à la structure rigide qui sépare les lignes de commande du bord d'attaque de l'aile, des lignes du bord de fuite et il se manipule comme une barre de kite standard. L'utilisateur lève ou baisse la barre de contrôle horizontale pour choquer ou border et l'incline d'un côté ou de l'autre pour diriger l'aile.

La pratique du kite avec ce dispositif équipé de lignes très courtes limite l'amplitude des embarquements intempestifs grâce à la réduction de la fenêtre de vol. De plus, il présente plusieurs autres avantages comme par exemple un apprentissage plus facile, un contrôle plus direct de l'aile, des enchaînements de courbes plus courts et fluides, un encombrement limité sur des spots étroits ou surpeuplés ou encore la possibilité de poser ou décoller son aile facilement sans assistance ainsi qu'un contrôle plus aisé de l'aile dans les vents irréguliers. Les différentes pratiques telles que le Kitesurf, le Snowkite, le Mountainboard ou le Kiteboat sont ainsi plus accessibles pour le grand public.

L'invention a pour objet un dispositif de contrôle pour les ailes de traction caractérisé en ce qu'il est constitué d'une structure haute composée, par exemple, d'un assemblage de tubes formant un « Y ».

La base de la structure est reliée au centre d'une barre de contrôle horizontale, disposée perpendiculairement par rapport à la structure. Une articulation constitue la liaison entre la base de la structure et le centre de la barre de contrôle précitée, ce qui permet à cette dernière d'agir comme un levier appuyé sur un point fixe situé en son centre, de sorte que l'abaissement de l'un de ses côtés provoque l'élévation de l'autre.

L'extrémité d'une pré-ligne arrière est fixée à un côté de la barre basse de contrôle, la partie centrale de la pré-ligne traverse un anneau positionné à l'arrière de la structure haute puis son autre extrémité est fixée au côté opposé de la barre de contrôle.

Les lignes de commande du bord de fuite de l'aile sont reliées à des cordons prévus de chaque côté de la pré-ligne arrière. L'extrémité avant de la structure en « Y » comporte un guide traversé par la pré-ligne avant. Les lignes de commande du bord d'attaque de l'aile sont reliées à la partie haute de la pré-ligne précitée. Un taquet coinceur et une butée sont fixés à la pré-ligne dans sa partie médiane juste sous la branche avant de la structure. La partie haute de la pré-ligne traverse une poulie surmontée d'un cordon doublé, prévu pour fixer les lignes de commande du bord d'attaque de l'aile. La pré-ligne redescend ensuite pour traverser à nouveau le guide précité puis la butée et le taquet coinceur qui permet de modifier la longueur de la pré-ligne avant afin de régler la puissance de l'aile. La partie basse de la pré-ligne est reliée à une boucle de largage destinée à être fixée au harnais de l'utilisateur.

Selon des modes particuliers de réalisation le dispositif de contrôle comporte les caractéristiques suivantes :
- la structure haute du dispositif comporte des branches supérieures obliques.
- une articulation peut constituer la liaison entre la base de la structure et le centre d'une barre de contrôle horizontale disposée perpendiculairement par rapport à la structure.
- les extrémités basses des lignes de commande du bord de fuite d'une aile de traction peuvent être reliées à des cordons prévus de chaque côté de la pré-ligne arrière.
- la partie centrale de la pré-ligne arrière peut traverser un anneau positionné à l'extrémité arrière de la structure haute et les extrémités de la pré-ligne peuvent être fixées de chaque côté de la barre de contrôle basse.
- la partie avant de la structure en forme de « Y » peut comporter un guide traversé par une pré-ligne fixant, dans sa partie haute, les lignes de commande du bord d'attaque d'une aile de traction.
- un système traditionnel de réglage de la puissance de l'aile peut être prévu sur la pré-ligne avant.
- une butée, située sous le guide avant de la structure haute, peut être placée sur la pré-ligne.
- une boucle de largage de l'aile destinée à être reliée au harnais de l'utilisateur peut être fixée à l'extrémité basse de la pré-ligne avant.
- des gaines semi-rigides de grandes longueurs peuvent envelopper partiellement la pré-ligne arrière.
- des enveloppes de protection peuvent recouvrir la structure haute et l'articulation.

L'invention sera mieux comprise à la lecture de la description qui suit, donnée uniquement à titre d'exemples non limitatifs et faite en se référant aux dessins qui l'accompagne.
- la figure 1 représente le dispositif de contrôle en perspective.
- la figure 2 montre le dispositif de contrôle de profil relié à une aile de traction.
- la figure 3 est une vue de l'articulation constituant la liaison entre la base de la structure haute et le centre de la barre de contrôle basse.

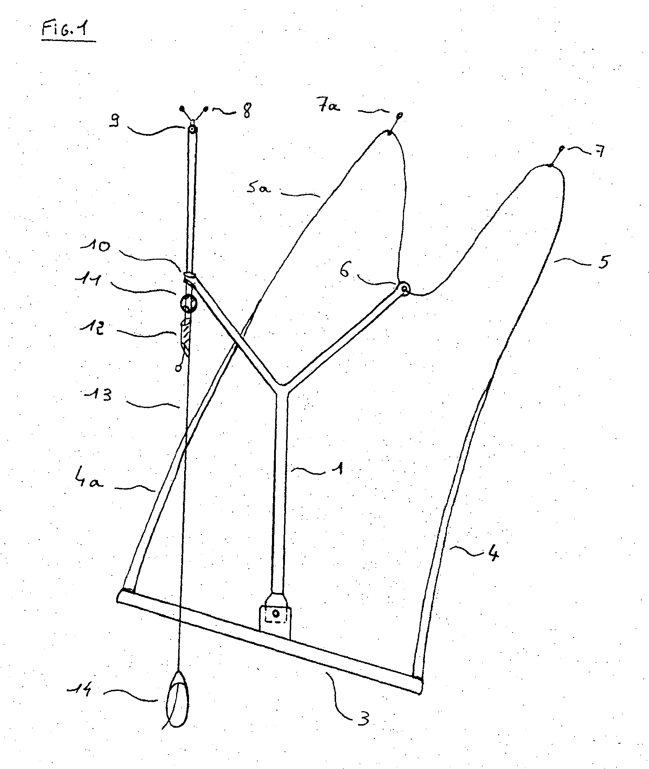

En référence à ces dessins, le dispositif de contrôle figure 1 est composé d'une structure (1) haute, verticale, en forme de « Y » constituée, par exemple, d'un assemblage de tubes en carbone, aluminium ou fibre de verre... Le positionnement oblique, en « V », des branches supérieures de la structure (1) limite le risque de blocage ou d'entortillement des pré-lignes (5) ; (5a) ; (13) dessous, ou autour des branches de la structure (1).

La base de la structure (1) est reliée, par le biais d'une articulation (2), au centre d'une barre de contrôle (3) horizontale disposée perpendiculairement par rapport à la structure (1) haute. L'articulation (2) permet à la barre de contrôle (3) horizontale d'effectuer un mouvement de bascule de sorte que l'abaissement de l'un de ses côtés provoque l'élévation de l'autre. Chaque bout d'une pré-ligne (5) ; (5a) arrière est relié à une extrémité de la barre de contrôle (3). La partie centrale de la pré-ligne (5) ; (5a) traverse un anneau (6) positionné à l'extrémité arrière de la structure (1). Des cordons (7) ; (7a) prévus de chaque côté de la pré-ligne (5) ; (5a) permettent de fixer la base des lignes de commande d'une aile de traction. Des gaines (4) ; (4a) semi-rigides recouvrent la partie basse et médiane de la pré-ligne (5) ; (5a) arrière.

L'extrémité avant de la structure (1) en « Y » comporte un guide (10) traversé par une deuxième pré-ligne (13) qui fixe, dans sa partie haute, les lignes du bord d'attaque de l'aile. L'extrémité basse de la pré-ligne (13) comporte une boucle de largage (14) destinée à être accrochée au harnais de l'utilisateur. Un taquet coinceur (12) et une butée (11) sont fixés à la partie médiane de la pré-ligne ((13), sous la branche avant de la structure (1). La pré-ligne (13) traverse le guide (10) précité puis passe à travers une poulie (9) haute, surmontée d'un cordon (8) doublé permettant de fixer les lignes de commande du bord d'attaque de l'aile (13), elle redescend ensuite pour passer à nouveau à travers le guide (10) puis la butée (11) et le taquet coinceur (12).

L'utilisateur peut ainsi régler la puissance de l'aile en modifiant la longueur de la pré-ligne (13) avant.

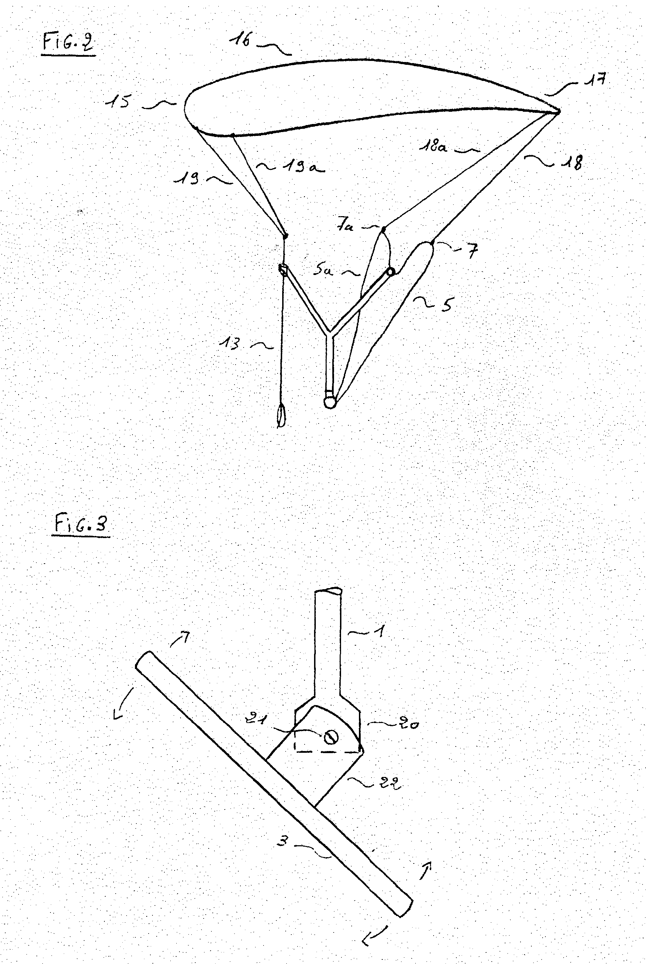

La figure 2 montre le dispositif de contrôle de profil relié à une aile de traction (16). Les bases des lignes de commande (19) ; (19a) du bord d'attaque (15) de l'aile (16) sont fixées à l'extrémité haute de la pré-ligne (13) avant et les bases des lignes de commande (18) ; (18a) du bord de fuite (17) de l'aile (16) sont fixées aux cordons (7) ; (7a) prévus de chaque côté de la pré-ligne (5) ; (5a) arrière.

La figure 3 représente l'articulation constituant la liaison entre la base de la structure (1) haute et la partie centrale de la barre de contrôle (3). L'extrémité basse (20) de la structure (1) est élargie et aplatie puis insérée dans la chape (22) fixée au centre de la barre de contrôle (3). Un axe (21) traverse la chape (22) et l'extrémité basse (20) élargie de la structure (1). L'axe (21) constitue un point fixe pour permettre la bascule de la barre de contrôle (3), de sorte que l'abaissement de l'un de ses côtés provoque l'élévation de l'autre afin de diriger l'aile à la manière d'une barre de kite traditionnelle. Pour limiter l'encombrement du dispositif par exemple pour le transport ou le stockage, la barre de contrôle (3) peut être positionnée verticalement le long de la structure (1) grâce à la hauteur importante de la chape (22) lui permettant une bascule de grande amplitude.

La présente invention ne se limite pas aux modes de réalisation décrits précédemment, par exemple plusieurs systèmes de pliage ou de démontage peuvent être adaptés.

La structure verticale ou l'articulation peuvent être de formes différentes ou remplacées par des éléments similaires présentant les mêmes fonctions.

D'une manière générale, de nombreuses modifications peuvent être apportées sans sortir du domaine de l'invention. Le dispositif de contrôle concerne les fabricants d'accessoires pour les ailes de traction.

## Revendications

1. Dispositif de contrôle pour les ailes de traction constitué d'une structure (1) haute positionnée de façon perpendiculaire au centre d'une barre de contrôle (3) basse et reliée à cette dernière, **caractérisé en ce que** la structure (1) haute est arrangée en forme de "Y", présentant des branches obliques en « V », une articulation (2) est prévue dans la partie basse de la structure (1) en forme de « Y », l'extrémité avant de la structure (1) comporte un guide (10) traversé par une première pré-ligne (13) à laquelle sont fixées les lignes avant d'une aile de traction, l'extrémité basse de la pré-ligne (13) est destinée à être reliée, en usage, à l'utilisateur, une deuxième pré-ligne (5) ; (5a) traverse un anneau (6) situé à l'extrémité arrière de la structure (1) centrale, chaque bout de la pré-ligne (5) ; (5a) est fixé à une extrémité de la barre de contrôle (3), la pré-ligne (5) ; (5a) comporte des points de fixation (7) ; (7a) pour relier les lignes arrière d'une aile de traction.

2. Dispositif de contrôle selon la revendication 1 **caractérisé en ce que** la barre de contrôle (3) basse agit comme un levier appuyé sur un axe (21) ou un point fixe situé en son centre, de sorte que l'abaissement de l'un de ses côtés provoque l'élévation de l'autre.

3. Dispositif de contrôle selon la revendication 1 **caractérisé en ce qu'**une butée (11) est placée sur la pré-ligne (13) avant, juste en-dessous du guide (10) positionné à l'extrémité avant de la structure (1).

4. Dispositif de contrôle selon la revendication 1 **caractérisé en ce que** des gaines (4) ; (4a) semi-rigides enveloppent partiellement la pré-ligne (5) ; (5a) arrière.

5. Dispositif de contrôle selon les revendications 1 et 2 **caractérisé en ce que** la base (20) élargie et aplatie de la structure (1) est insérée dans une chape (22) fixée au centre de la barre de contrôle (3) et maintenue en place par un axe (21).

6. Dispositif de contrôle selon les revendications 1 et 3 **caractérisé en ce qu'**un moyen (12) de réglage de la puissance de l'aile est prévu sur la pré-ligne (13) avant, sous le guide (10) précité.

## Patentansprüche

1. Steuerungsvorrichtung für die Leistungsdrachen, die aus einer hohen Struktur (1) gebildet ist, die senkrecht im Zentrum einer unteren Steuerstange (3) positioniert und mit dieser verbunden ist, **dadurch gekennzeichnet, dass** die hohe Struktur (1) Y-förmig eingerichtet ist, schräge V-förmige Abzweigungen aufweist, ein Gelenk (2) im unteren Teil der Y-förmigen Struktur (1) vorgesehen ist, das vordere Ende der Struktur (1) eine Führung (10) aufweist, die von einer ersten Vorleine (13) durchquert wird, an der die vorderen Leinen eines Leistungsdrachens befestigt sind, das untere Ende der Vorleine (13) bestimmt ist, im Gebrauch mit einem Benutzer verbunden zu sein, eine zweite Vorleine (5); (5a) einen Ring (6) durchquert, der sich am hinteren Ende der zentralen Struktur (1) befindet, jedes Endstück der Vorleine (5); (5a) an einem Ende der Steuerstange (3) befestigt ist, die Vorleine (5); (5a) Befestigungspunkte (7); (7a) aufweist, um die hinteren Leinen eines Leistungsdrachens zu verbinden.

2. Steuerungsvorrichtung nach Anspruch 1, **dadurch gekennzeichnet, dass** die untere Steuerstange (3) wie ein auf einer Achse (21) oder einem in ihrer Mitte befindlichen Festpunkt abgestützter Hebel derart agiert, dass das Senken einer ihrer Seiten das Heben der anderen bewirkt.

3. Steuerungsvorrichtung nach Anspruch 1, **dadurch gekennzeichnet, dass** ein Anschlag (11) auf der vorderen Vorleine (13) direkt unterhalb der Führung (10) platziert ist, die am vorderen Ende der Struktur (1) positioniert ist.

4. Steuerungsvorrichtung nach Anspruch 1 **dadurch gekennzeichnet, dass** halbstarre Hüllen (4); (4a) die hintere Vorleine (5) ; (5a) teilweise umgeben.

5. Steuerungsvorrichtung nach den Ansprüchen 1 und 2, **dadurch gekennzeichnet, dass** die erweiterte und abgeflachte Basis (20) der Struktur (1) in ein Gehäuse (22) eingesetzt ist, welches im Zentrum der Steuerstange (3) befestigt und von einer Achse (21) am Platz gehalten wird.

6. Steuerungsvorrichtung nach den Ansprüchen 1 und 3, **dadurch gekennzeichnet, dass** ein Mittel (12) zum Einstellen der Leistung des Drachens (16) auf der vorderen Vorleine (13) unter der vorgenannten Führung (10) vorgesehen ist.

## Claims

1. A control device for power kites, formed by an upper structure (1) positioned perpendicular to the center of a lower control bar (3) and connected to that latter, **characterised in that** the upper structure (1) is arranged in a Y shape, having oblique branches in a V shape, an articulation (2) being provided in the lower part of the Y-shaped structure (1), the front end of the structure (1) is provided with a guide (10) crossed by a first pre-line (13) to which the front lines of a power kite are attached, the lower end of the pre-line (13) being intended to be connected, in use, to the user, wherein a second pre-line (5); (5a) crosses a ring (6) positioned at the rear end of the central structure (1), each end of the pre-line (5); (5a) being attached to an end of the control bar (3), the pre-line (5); (5a) being provided with attachment points (7); (7a) to connect to the rear lines of a power kite.

2. The control device according to claim 1, **characterised in that** the lower control bar (3) acts as a lever bearing on an axle (21) or a fixed point located at its center, such that lowering one of its sides causes the other to be raised.

3. The control device according to claim 1, **characterised in that** a stop (11) is placed on the front pre-line (13), just below the guide (10) positioned at the front end of the structure (1).

4. The control device according to claim 1, **characterised in that** semi-rigid sheaths (4); (4a) partially enclose the rear pre-line (5); (5a).

5. The control device according to claims 1 and 2, **characterised in that** the widened and flattened base (20) of the structure (1) is inserted into a yoke (22) attached to the center of the control bar (3) and kept in place by an axle (21).

6. The control device according to claims 1 and 3, **characterised in that** a means (12) for adjusting the power of the kite (16) is provided on the front pre-line (13), below the aforementioned guide (10).
